# EUROPEAN PATENT APPLICATION

(11) **EP 3 518 163 A1**
(43) Date of publication of application: **31.07.2019**
(21) Application number: 18153355.5
(22) Date of filing: 25.01.2018
(51) Int. Cl.: G06Q 20/02, G06Q 20/06, G06Q 20/38, G06Q 20/40

(54) **METHOD FOR RAPID BLOCKCHAIN TRANSACTIONS**

(71) Applicant: Chain IP Holdings, Inc., Panama City (PA)
(72) Inventor: DE FILIPPI, Giotto, St. Julians, stj1471 (MT); FULLERTON, Vincent Joseph, Dearborn, Mi 48124 (US)
(74) Representative: Stolmár & Partner Patentanwälte PartG mbB

(57) **Abstract**

The present invention relates to a method (3000) for executing transactions in a network (2000) implementing a distributed ledger, the network (2000) comprising a plurality of transaction addresses (1101-1103) and at least one warranting address (2300), the method (3000, 4000) comprising the steps of: issuing (S3100, S5100, 6100) a rapid transaction, by a first transaction address (1101) toward a second transaction address (1102), reading (S3200) the rapid transaction, by the warranting address (2300), and warranting (S3300) the rapid transaction, by the warranting address (2300).

## Description

The present invention generally relates to a method for performing faster transactions in a network implementing a distributed ledger. More specifically, it relates to the introduction of a warranting node, thanks to which transactions among addresses can be warranted even before they are registered in the ledger.

### Prior art

Distributed ledgers are becoming a more common technology for certifying and tracking several kinds of assets, such as cryptocurrencies, contracts, but also documents such as certifications, medical records, identify documents, etc. The distributed ledgers also provide means for recording transactions related to assets or documents. Namely modification to the asset or documents, be it a modification to its content or to its owner, can be recorded in a reliable manner by a distributed ledger.

Several kinds of distributed ledgers are available, based on different technologies, such as blockchain, Hashgraph, etc. In general they all share the common concept that the network implementing the distributed ledger comprises a plurality of transaction addresses and a plurality of ledger computing nodes. The transactions among the transaction addresses are recorded by the ledger computing nodes with a computationally intensive approach, which provides the security of the distributed ledgers with respect to brute force hacker attacks.

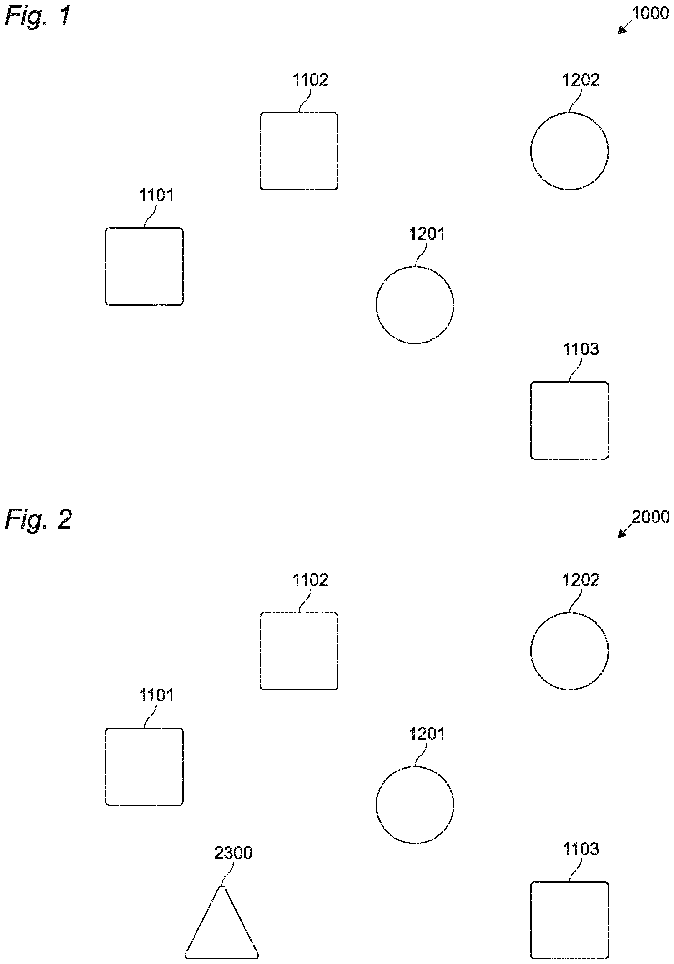

Figure 1 schematically illustrates a network 1000 implementing a distributed ledger in accordance with the state of the art, comprising a plurality of transaction addresses 1103-1103 and a plurality of ledger computing nodes 1201-1202. The ledger computing nodes 1201-1202 are configured to run one or more smart contracts for allowing any of the transaction addresses 1101-1103 to perform several kinds of transactions which are then recorded in the distributed ledger.

In general, in distributed ledgers such as the one illustrated in figure 1, any transaction address 1101-1103 can perform transactions with any other transaction address 1101-1103. A given transaction is initiated by a transaction address 1101-1103 and is issued, that is, rendered known, to the network 1000 or at least to the ledger computing nodes 1201-1202 for recording into the distributed ledger. Once the transaction is recorded into the distributed ledger it cannot be modified or otherwise withdrawn. The distributed ledger is updated with a predetermined frequency. In the case of a network implementing a blockchain approach, a new block is computed with a given frequency in time.

The delay between issuing the transaction to the network 1000 and recording the transaction into the distributed ledger however poses an issue to the certainty of the transactions. In particular, a given transaction only acquires certainty once it is recorded in the distributed ledger. Until that moment, the validity of the transaction is not certain.

For instance, a given transaction A, with which transaction address 1101 transfers an amount of money to transaction address 1102, can be issued by transaction address 1101 to the network 1000. As long as the transaction A is not recorded in the distributed ledger, transaction address 1101 is still owner of the money and transaction address 1102 has not received it. In the case of slow transactions, such as the paying of an electricity bill, this is not an issue. Transaction address 1101, for instance owned by a private person, can transfer the amount of money due for the bill to transaction address 1102, for instance owned by the electricity provider, and the transaction can be recorded in the distributed ledger later in time, either a few minutes later or even a few hours later.

This however becomes a problem for faster transactions, for instance when buying something in a shop. In this case, a person owning transaction address 1101 may grab an object in the shop and go to the counter, where payment for the object is made by transferring an amount of money to transaction address 1102, owned by the shop owner, via transaction A. At this point, the person owning the transaction address 1101 may intend to leave the shop. However, as long as the distributed ledger has not recorded the transaction, the owner of transaction address 1102 doesn't have any certainty that the object has been paid for.

In some cases, the owner of transaction address 1102 can rely on the characteristics of the network 1000, which do not allow the transaction A to be withdrawn. Thus the owner of transaction address 1102 may confidently assume that, at some point, the transaction A will be recorded in the distributed ledger and the amount will be thereby transferred to the transaction address 1102. This, however, can be prevented by a malicious transaction address 1101 by issuing another transaction B.

As an example, it can be assumed that transaction address 1101 owns 10 units of currency and transaction A transfers those 10 units to transaction address 1102.

Transaction address 1101 can subsequently create a transaction B to transfers those 10 units to transaction address 1103. This is allowed since the transaction A is not yet recorded in the distributed ledger and therefore transaction address 1101 still owns the 10 unity of currency. When the distributed ledger is updated, for instance when computing a new block if the ledger is based on a blockchain approach, one of the two concurring transactions A and B will be handled first by the ledger computing node 1201, 1202. One of those transactions will deplete the account of transaction address 1101, making the subsequent transaction void.

Thus, a malicious or careless transaction B by transaction address 1101 can invalidate transaction A, thus creating uncertainty for the transaction address 1102 concerning the payment.

In some distributed ledger implementations, there are furthermore methods available to transaction address 1101 for incentivizing the ledger computing nodes 1201, 1202 in executing the transaction B before transaction A. For instance transaction address 1101 can offer a higher fee for processing transaction B than for processing transaction A. By making use of those methods, transaction address 1101 can thus maliciously defraud transaction address 1102.

One known solution to this problem consists in increasing the frequency with which the distributed ledger is updated. This frequency, however, depends among other factors on the computational resources available to the network. Increasing the frequency may increase the computational resources needed by network 1000 or may otherwise render the operation of the network 1000 more complex, both of which are not desirable outcomes.

The present invention has been developed in view of the above problems and it is an object thereof to provide a manner for increasing payment confidence at transaction address 1102, without increasing the computational resources or complexity of network 1000.

### Summary of the invention

The present invention generally relies on the principle that an additional kind of entity can be added to the network so as to operate as a warranting address.

The warranting address warrants a given transaction by committing to execute an equivalent replacement transaction if the warranted transaction is not carried out, for any given reason. In this manner, the receiving address has an additional level of confidence that the transaction will be carried out, either by the original transaction address or by the warranting address. This increased level of confidence for the receiving address is advantageously provided without any modification to the frequency at which the distributed ledger is computed and, in this manner, without the associated drawbacks described above.

In particular, an embodiment of the invention can relate to a method for executing transactions in a network implementing a distributed ledger, the network comprising a plurality of transaction addresses and at least one warranting address, the method comprising the steps of: issuing a rapid transaction, by a first transaction address toward a second transaction address, reading the rapid transaction, by the warranting address, and warranting the rapid transaction, by the warranting address.

Thanks to this approach the second transaction address has an increased confidence that the transaction will be carried out, even in case of double-spending by the first transaction address. This can advantageously be achieved without increasing the frequency of recording of the distributed ledger.

In some embodiments the warranting step can comprise the steps of: issuing a warranting transaction, by the warranting address, accepting the warranting transaction, by the first transaction address.

Thanks to this approach the first transaction address has control over which warranting transaction is accepted thus increasing competition among warranting addresses to provide an effective warranting transaction.

In some embodiments the issuing step can further comprise the step of: setting, by the first transaction address, a time duration during which the step of issuing the warranting transaction can be carried out, and issuing the rapid transaction.

Thanks to this approach the rapid transaction can comprise the time duration thus limiting the time during which warranting transactions can be issued, thereby increasing the effectiveness of the network in providing the second transaction address with a warranted rapid transaction.

In some embodiments the accepting step can further comprise the step of: evaluating all available warranting transactions, relating to the rapid transaction, and selecting a warranting transaction with a lowest warranting fee, by the first transaction address.

Thanks to this approach the selection of the warranting transaction can be automated. This may also advantageously increases the likelihood of warranting addresses issuing cheaper warranting transactions as soon as possible, in addition to avoiding the issuing of warranting transactions with a warranting fee higher than the one from already available warranting transaction. The reductions in the number of warranting transaction makes a more efficient use of the computational resources of the network.

In some embodiments the issuing step can further comprise the steps of: setting, by the first transaction address, a maximum warranting fee for the warranting transaction, and issuing the rapid transaction.

Thanks to this approach, the number of warranting transactions can be reduced as those warranting addresses intending to issue a higher warranting fee will not proceed with the issuing of the transaction as it would be ignored.

In some embodiments the accepting step can accept a first warranting transaction issued with a warranting fee lower than the maximum warranting fee.

Thanks to this approach, the number of warranting transactions can be drastically reduced thus making a more efficient use of the computational resources of the network.

In some embodiments the issuing step can further comprise the steps of: setting, by the first transaction address, a fixed warranting fee for the warranting transaction, and issuing the rapid transaction.

Thanks to this approach, a warranting address intending to accept the warranting transaction only needs to approve the conditions set by the first transaction address, thus limiting the number of warranting transactions even further.

Another embodiment of the invention can relate to a method for executing transactions in a network implementing a distributed ledger, the network comprising a plurality of transaction addresses and at least one warranting address, the method comprising the steps of: issuing a rapid transaction, by a first transaction address toward a second transaction address, issuing a warranting transaction, by the first transaction address, reading the warranting transaction, by the warranting address, and warranting the rapid transaction, by the warranting address.

Thanks to this approach, control of the details of the warranting transaction, in particular of the warranting fee, can be delegated to the first transaction address. In this manner, the number of warranting transactions is limited to a single one.

Yet another embodiment of the invention can relate to a method for executing transactions in a network implementing a distributed ledger, the network comprising a plurality of transaction addresses and at least one warranting address, the method comprising the steps of: issuing a transaction, by a first transaction address toward a second transaction address, indicating the transaction as a rapid transaction, by the second transaction address, reading the rapid transaction, by the warranting address, and warranting the rapid transaction, by the warranting address.

Thanks to this approach, the decision on whether a warranting transaction is needed or not can be taken by the second transaction address thus allowing the second transaction address more flexibility in how to accept transactions from the first transaction address.

### Short description of the figures

Figure 1 schematically illustrates a network 1000 implementing a distributed ledger in accordance with the state of the art;
Figure 2 schematically illustrates a network 2000 implementing a distributed ledger;
Figure 3 schematically illustrates a method 3000 for executing transactions in a network implementing a distributed ledger;
Figure 4 schematically illustrates a possible implementation of warranting step S3300;
Figure 5 schematically illustrates a possible implementation of setting step S5100;
Figure 6 schematically illustrates a possible implementation of setting step S6100;
Figure 7 schematically illustrates a possible implementation of setting step S7100;
Figure 8 schematically illustrates a method 8000 for executing transactions in a network implementing a distributed ledger; and
Figure 9 schematically illustrates a method 9000 for executing transactions in a network implementing a distributed ledger.

### Detailed description of preferred embodiments

Figure 2 schematically illustrates a network 2000 implementing a distributed ledger in accordance with an embodiment of the invention. Although only the various elements 1101-1103, 1201-1202 and 2300 are schematically illustrated, it will be clear that those elements can be connected to each other by means of a network, such as the Internet. The interconnections are however not illustrated, for clarity of representation.

The network 2000 differs from network 1000 due to the presence of warranting address 2300. Warranting address 2300 could be, in practice, implemented by any electronic equipment capable of exchanging information within network 2000, for instance, a computer. In general, warranting address 2300 is capable of exchanging information with the remaining elements in the network 2000, in particular with transaction addresses 1101-1103. It will furthermore be clear that a plurality of warranting addresses 2300 can be present, operating as it will be described for the single warranting address 2300 below. It will further be clear that a single address can operate both as a warranting address and as a transaction address.

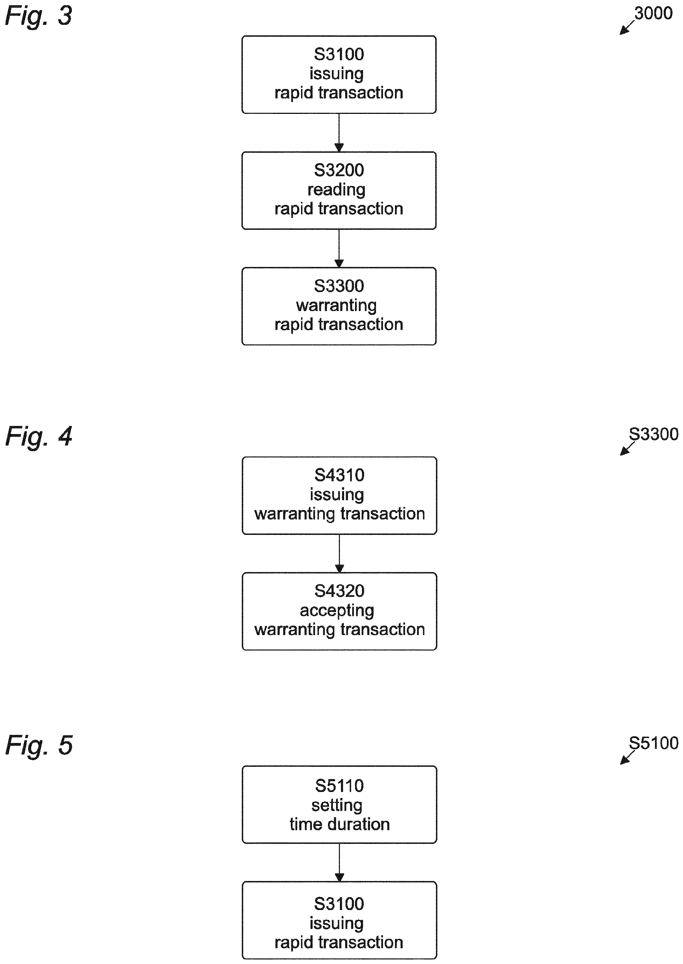

The presence of warranting address 2300 allows the method 3000, which is schematically illustrated in figure 3, to be implemented. More specifically, method 3000 is a method for executing transactions in the network 2000 implementing a distributed ledger. As visible in figure 2, the network 2000 comprises at least plurality of transaction addresses 1101-1103 and at least one warranting address 2300.

The method 3000 comprises a step S3100 of issuing a rapid transaction, by a first transaction address 1101 to a second transaction address 1102. The indication of whether the transaction is a rapid transaction or not provides a mean for the first transaction address 1101 to increase the confidence that the transaction will be carried out, as will be described below. The indication of whether the transaction is a rapid transaction or not can be provided by an appropriate flag in the transaction, which can be set by the first transaction address 1101. The issuing of the transaction can be performed by broadcasting the transaction to the entire network 2000, or at least to the ledger computing nodes 1201, 1202 and to the warranting address 2300.

The method 3000 further comprises a step S3200 of reading the rapid transaction, by at least the warranting address 2300. The warranting address can thereby recognize if the transaction is indicated as a rapid transaction or not, by evaluating the content of the transaction. If the transaction is indicated as being a rapid transaction, the warranting address 2300 has the possibility to warrant the rapid transaction in a warranting step S3300 or not.

If the rapid transaction is not warranted by the warranting address 2300 then the operation of the warranting address 2300 is concluded and the rapid transaction is handled by the network as any other transaction and will eventually be recorded in the distributed ledger, with the due time for this operation.

If, on the other hand, the warranting address 2300 proceeds by performing the warranting step S3300, the rapid transaction is warranted. By warranting the rapid transaction, the warranting address 2300 commits that, should the rapid transaction fail, an equivalent transaction will be carried out by the warranting address 2300 toward the second transaction address 1102. In this manner, the second transaction address 1102 has an increased confidence that the rapid transaction from the first transaction address 1101, or an equivalent transaction from the warranting address 2300, will be performed.

Figure 4 schematically illustrates a possible implementation of step S3300 of method 3000 according to an embodiment of the invention. In particular, in this embodiment, the warranting step S3300 comprises a step S4310 of issuing a warranting transaction, by the warranting address 2300. That is, once the warranting address 2300 has recognized the rapid transaction and has decided to warrant the rapid transaction, the warranting address 2300 issues a warranting transaction which indicates its intention to warrant the rapid transaction. The warranting transaction comprises at least a field indicating the rapid transaction which is warranted and a field indicating the fee for the warranting operation. In some embodiments, the fee is decided by the warranting address.

The warranting transaction is issued to the network 2000 and is thus visible also to the first transaction address 1101. This provides the beneficial advantage that the first transaction address 1101 can receive a plurality of warranting transactions proposals issued by a plurality of warranting addresses 2300 and choose one or more among those which the first transaction address 1101 finds to be most suitable. Thus, in an accepting step S4320, the first transaction address 1101 can proceed to accept one or more warranting transaction.

Once the warranting transaction has been accepted by the first transaction address 1101, the second transaction address 1102 has an increased confidence that the rapid transaction, from the first transaction address 1101, or an equivalent transaction, from the warranting address 2300 which has issued the warranting transaction accepted by the first transaction address 1101, will be performed.

Figure 5 schematically illustrates a possible implementation of step S5100 in substitution of step S3100 of method 3000, according to an embodiment of the invention. In particular, in this embodiment, the issuing step S5100 comprises a step S5110 of setting, by the first transaction address 1101, a time duration during which the step S4310 of issuing the warranting transaction can be carried out. The time duration can be selected by the first transaction address 1101 and can be indicated in the rapid transaction by an appropriate field. After the time duration has been set, the first transaction address 1101 can proceed with the issuing of the rapid transaction in an issuing step S3100 as described above.

Thanks to this approach, it is possible to limit the time during which the one or more warranting addresses 2300 can issue respective warranting transactions. This provides the beneficial advantage that the amount of traffic in the network 2000 is limited, thus limiting the use of computational resources of the network 2000. In particular, by introducing a time limit to issue warranting transactions it is likely to have less warranting transactions issued than without a time limit. Also the presence of a time limit introduces a time pressure on the warranting nodes to issue cheaper warranting transactions sooner, thus further reducing the number of warranting transactions issued. Moreover, in this manner, the first transaction address 1101 can incentivize the issuing of warranting transactions within a configurable time limit. This can be particularly useful since, in some cases, the first transaction address 1101 may have only a very limited time limit to have the rapid transaction warranted by a warranting address 2300, while in other cases, the first transaction address 1101 may have a longer time.

Moreover, this is particularly advantageous for the first transaction address 1101 as it forces the warranting addresses 2300 to compete with each other within the configurable time limit in order to provide the first transaction address 1101 with a warranting transaction having a low fee. This further reduces the combination of resources used by the network 2000 since it incentivize a warranting address 2300 to issue a low-fee warranting transaction as soon as possible. Once such low-fee warranting transaction has been issued, other warranting addresses 2300, which would have issued a warranting transaction with a higher fee, have no interest in issuing such warranting transactions as they are informed that those warranting transactions are not competitive with the warranting transaction already available in the network 2000. Thus, by incentivizing a quick release of a low-fee warranting transaction, the method reduces the amount of warranting transactions issued by the warranting addresses 2300 and thus makes a more efficient use of the computational resources of network 2000.

In some embodiments, the accepting step S4320 can comprise a step of evaluating all available warranting transactions, relating to the rapid transaction under consideration, and selecting a warranting transaction with a lowest warranting fee. In this manner, the selection among the plurality of available warranting transactions is made in an automatic manner thus relieving the operator of the first transaction address of from comparing the plurality of warranting transactions and selecting the cheapest one.

In some additional embodiments, the above described evaluating step is carried out at the end of the time duration set by the first transaction address 1101 in the setting step S5110.

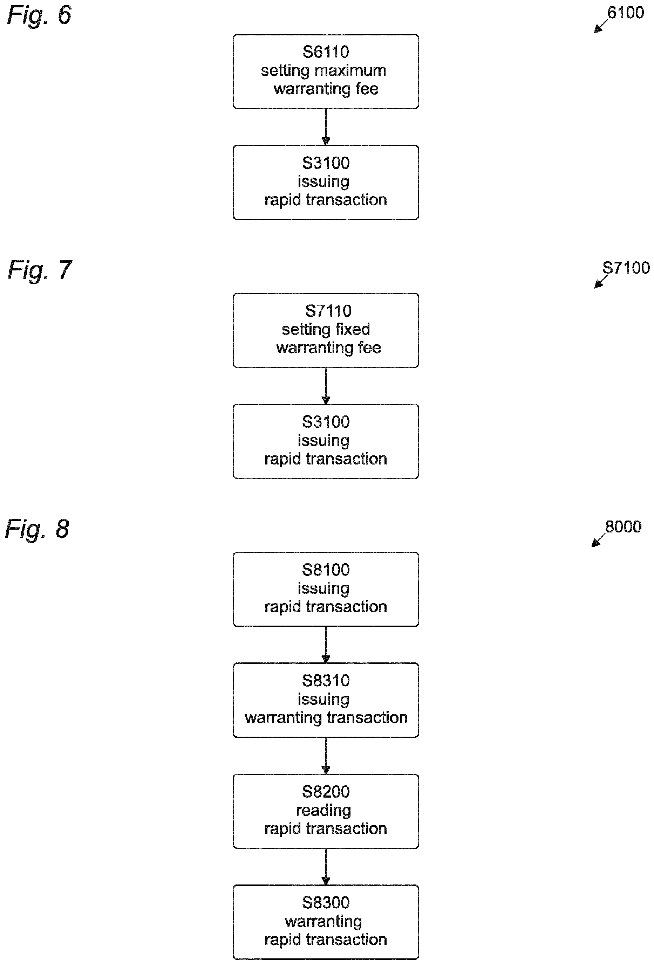

Figure 6 schematically illustrates a possible implementation of step S6100 in substitution of step S3100 of method 3000 and/or in possible combination of step S5100, according to an embodiment of the invention. In particular, in this embodiment, the issuing step S6100 comprises a step S6110 of setting, by the first transaction address 1101, a maximum warranting fee for the warranting transaction. The maximum warranting fee can be selected by the first transaction address 1101 and can be indicated in the rapid transaction by an appropriate field. After the time duration has been set, the first transaction address 1101 can proceed with the issuing of the rapid transaction in an issuing step S3100 as described above.

In this manner, it is possible for the first transaction address 1101 to limit the number of warranting transactions which will be issued by warranting addresses 2300. In particular, the warranting addresses 2300 which intended to issue a warranting transaction with a warranting fee higher than the maximum warranting fee indicated by the first transaction address 1101 will have no further interest in doing so as they know that the first transaction address 1101 will not accept such warranting transactions. This also advantageously makes a more efficient use of the computational resources of network 2000 in that it reduces the amount of warranting transactions issued to the network 2000. Additionally, it makes more efficient use of the computational resources of the first transaction address 1101 since the first transaction address 1101 will have to evaluate fewer warranting transactions, in order to define which one to accept.

In some embodiments, the accepting step S4320 is configured to accept the first warranting transaction issued having a warranting fee lower than the maximum warranting fee set in step S5110.

Thanks to this approach, it is advantageously possible for the first transaction address 1101 to more quickly select a warranting transaction thus making the warranting step S3300 faster. This further makes a more efficient use of the computational resources of the first transaction address 1101 since it relieves the first transaction address 1100 and one from evaluating a plurality of warranting transactions which may have been issued after the warranting transaction having the warranting fee lower than the maximum warranting fee. Moreover, this approach makes a more efficient use of the computational resources of the network 2000 since it reduces the number of warranting transactions issued to the network 2000 in particular, after the first transaction address 1101 accepted the first warranting transaction issued having a warranting fee lower than the maximum warranting fee, the remaining warranting addresses 2300 have no interest in issuing further warranting transactions.

In the embodiments described above, the amount of the warranting fee is decided by the warranting address 2300. However, the present invention is not limited thereto and it may be possible for the first transaction address 1101 to decide the warranting fee instead.

This may be implemented, for instance, by setting the warranting fee at the first transaction address 1101, either by indicating the warranting fee in the rapid transaction or by issuing a warranting transaction by the first transaction address 1101.

Figure 7 schematically illustrates a possible implementation of step S7100 in substitution of step S3100 of method 3000 and/or in possible combination of step S5100, according to an embodiment of the invention. In particular, in this embodiment, the issuing step S7100 comprises a step S7110 of setting, by the first transaction address 1101, a fixed warranting fee for the warranting transaction. The fixed warranting fee can be selected by the first transaction address 1101 and can be indicated in the rapid transaction by an appropriate field. After the fixed warranting fee has been set, the first transaction address 1101 can proceed with the issuing of the rapid transaction in an issuing step S3100 as described above.

Thanks to this approach, it is possible for the warranting address 2300 to decide whether or not to accept the fixed warranting fee set by the first transaction address 1101. If the warranting address 2300 accepts the fixed warranting fee, it can then proceed to issue a warranting transaction in an issuing step S4310 as described above with the warranting fee set by the first transaction address 1101. This warranting transaction can then be accepted by the first transaction address 1101 in a accepting step S4320 as described above. This approach advantageously further increases the efficiency of the use of computational resources of the network 2000 since only those warranting address 2300 willing to accept the fixed warranting fee need to issue a warranting transaction and, upon issuing of the first warranting transaction and accepting of the warranting transaction by the first transaction address 1101, further warranting transactions are no longer needed, thus reducing the number of transactions in the network 2000.

Figure 8 schematically illustrates a method 8000 for executing transactions in a network implementing a distributed ledger. In particular, the method 8000 comprises a step of issuing S8100 a rapid transaction, by the first transaction address 1101 toward the second transaction address 1102 as described above. The method further comprises a step S8310 of issuing a warranting transaction, by the first transaction address 1101, in a manner similar to issuing step S4310, except that in this case the issuing is performed by the first transaction address 1101, instead of the warranting address 2300, thus advantageously allowing the first transaction address 1101 to selected the amount of the warranting fee.

The method 8000 further comprises a step S3800 of reading the warranting transaction, by the warranting address 2300, or by more warranting addresses 2300, and a step S8300 of warranting the rapid transaction, by the warranting address 2300. In particular, the first warranting address 2300 which accept the warranting fee indicated in the warranting transaction can proceed to accept the warranting transaction thus warranting the rapid transaction.

Thanks to this approach, the computational resources of network 2000 are used in a highly efficient manner since only one warranting transaction is issued to the network 2000. Moreover, since one warranting address 2300 does not know whether other warranting addresses 2300 may or may not proceed to warrant to the rapid transaction, there is a disincentive for any warranting address 2300 to wait and see what the other warranting addresses will do, since the first warranting address 2300 to accept the warranting transaction and thus warrant the rapid transaction will prevent the remaining warranting addresses from being able to do so. This also advantageously increases the speed of warranting the rapid transaction, since the warranting addresses 2300 willing to warrant the rapid transaction at the fee indicated to buy in the first transaction address 1101 have a reason to compete in time so as to be the first one to warrant the rapid transaction.

In the embodiments described above, if the rapid transaction is then recorded in the distributed ledger, the warranting fee is transferred to the warranting address 2300 while the amount indicated in the rapid transaction is transferred to the second transaction address 1102. On the other hand, in case of double spending, the second transaction address 1102 will receive the amount indicated in the rapid transaction from the warranting address 2300. This increase the confidence of the second transaction address 1102 that the amount indicated in the rapid transaction will be transferred to the second transaction address 1102. This mechanism further creates a disincentive for the warranting address 2300 to systematically warrant any rapid transaction at the lowest possible warranting fee. On the other hand, the warranting address 2300 has an incentive to evaluate the conditions according to which the rapid transaction has to be warranted. For instance, the warranting address 2300 may evaluate the past history of the first transaction address 1101, which may be recorded in the distributed ledger, so as to evaluate the behavior of the first transaction address 1101 and deciding on the amount of the warranting fee or whether to accept or not the warranting fee proposed by the first transaction address 1101.

It will be understood that, although the above embodiments have been described with reference to implementations in which the setting of the transaction as a rapid transaction is carried out by the first transaction address 1101, additional embodiments can be implemented in which the setting of the transaction as a rapid transaction is carried out by the second transaction address 1102. In such embodiments, the warranting fee would be paid by the second transaction address 1102. Thus, in all of the above embodiments in which actions are taken regarding the amount of the warranting fee and/or the time duration for issuing the warranting transaction could be carried out by the second transaction address 1102.

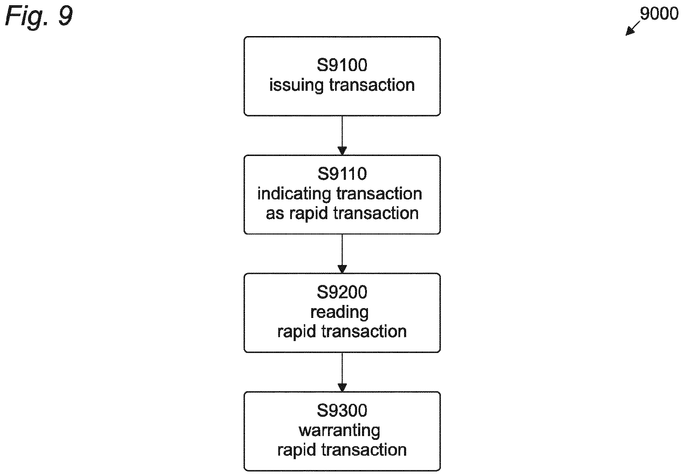

In this respect, figure 9 schematically illustrates a method 9000 for executing transactions in a network 2000 implementing a distributed ledger. The method comprises a step S9100 of issuing a transaction, by the first transaction address 1101 toward the second transaction address 1102. In this embodiment, the transaction is not yet defined as being a rapid transaction. In a subsequent step S9110 the transaction is indicated as a rapid transaction, by the second transaction address 1102. A subsequent step S9200 allows reading of the rapid transaction, by the warranting address 2300, in a manner similar to step S2200 described above. Finally, a warranting step S9300 allows warranting of the rapid transaction, by the warranting address 2300 in a manner similar to step S2300 described above.

Thus, in this case, the decision whether to carry out a rapid transaction is left to the second transaction address. This may be advantageous, in some cases, as it allows the second transaction address to decide whether to make use of the advantages of the rapid transaction as described above in exchange for the payment of a warranting fee. For instance, the second transaction address 1102 may decide to make use of the rapid transaction only in cases in which the transaction amounts is above a certain value or in those cases in which the owner of the second transaction address 1102 has reasons to doubt the seriousness of the owner of the first transaction address 1101.

It will be clear to those skilled in the art that the various features described above with reference to methods 1000 and 8000 can be applied to the method 9000 as well. For instance, with reference to the features illustrated in figure 4, the accepting of the warranting transaction will be performed by the second transaction address 1102. Still as an exemplary combination of the previous embodiment and of the method 9000, the steps S5110, S6110, S7110 or S8310 will be implemented by the second transaction address 1102.

In some further embodiments, the warranting address 2300 transfers, by means of the warranting transaction, the amount indicated in the rapid transaction to a buffer, in which the amount is kept until successful completion of the rapid transaction, that is, until the rapid transaction is successfully recorded in the distributed ledger. Thanks to this approach, the warranting address 2300 cannot cancel the warranting transaction and the amount is also not available to the warranting address 2300 for other transactions. This provides certainty to the second transaction address 1102 that the transaction in its favor will be carried out, either from the first transaction address 1101 or from the warranting address 2300.

In some further embodiments, the first transaction address can be associated to a transaction history. The transaction history can comprise all transactions of the first transaction address and/or, in some preferred embodiments, only the transactions of the first transaction address which resulted in double spending. In some even more preferred embodiments, the transaction history can simply comprise the number of transactions which resulted in double spending. The transaction history can be saved in the distributed ledger or in an buffer at the first transaction address. Thanks to the transaction history, the warranting address can quickly evaluate the past behavior of the first transaction address and adapt the transaction fee, or its decision whether to accept the transaction fee set by the first transaction address, accordingly.

Although different embodiments have been described above as separate and various features have been described in combination with any given embodiment, the present invention in not limited to the embodiments described. To the contrary, singular features from any given embodiment can result into alternative embodiments. Moreover singular features from a plurality of embodiments can be combined so as to result into further alternative embodiments. The scope of the invention is thereby not limited by the illustrated drawing and the described embodiments but is instead defined by the claims.

### List of reference numerals

### Figure 1

1000: network
1101-1103: transaction address
1201-1202: ledger computing node

### Figure 2

2000: network
2300: warranting address

### Figure 3

3000: method for controlling transactions
S3100: issuing rapid transaction
S3200: reading rapid transaction
S3300: warranting rapid transaction

### Figure 4

S4310: issuing warranting transaction
S4320: accepting warranting transaction

### Figure 5

S5100: issuing rapid transaction
S5110: setting time duration

### Figure 6

S6100: issuing rapid transaction
S6110: setting maximum warranting fee

### Figure 7

S7100: issuing rapid transaction
S7110: setting fixed warranting fee

### Figure 8

S8100: issuing rapid transaction
S8310: issuing warranting transaction
S8200: reading warranting transaction
S8300: warranting rapid transaction

### Figure 9

S9100: issuing transaction
S9110: indicating transaction as rapid transaction
S9200: reading warranting transaction
S9300: warranting rapid transaction

## Claims

1. A method (3000) for executing transactions in a network (2000) implementing a distributed ledger, the network (2000) comprising a plurality of transaction addresses (1101-1103) and at least one warranting address (2300), the method (3000) comprising the steps of:
issuing (S3100, S5100, S6100, S7100) a rapid transaction, by a first transaction address (1101) toward a second transaction address (1102),
reading (S3200) the rapid transaction, by the warranting address (2300), and
warranting (S3300) the rapid transaction, by the warranting address (2300).

2. The method according to claim 1, wherein the warranting step (S3300) comprises the steps of:
issuing (S4310) a warranting transaction, by the warranting address (2300),
accepting (S4320) the warranting transaction, by the first transaction address (1101).

3. The method according to claim 2, wherein the issuing step (S5100) further comprises the steps of:
setting (S5110), by the first transaction address (1101), a time duration during which the step of issuing (S4310) the warranting transaction can be carried out, and
issuing (S3100) the rapid transaction.

4. The method according to claim 3, wherein the accepting step (S4320) further comprises the step of:
evaluating all available warranting transactions, relating to the rapid transaction, and
selecting a warranting transaction with a lowest warranting fee, by the first transaction address (1101).

5. The method according to any previous claim, wherein the issuing step (S6100) further comprises the steps of:
setting (S6110), by the first transaction address (1101), a maximum warranting fee for the warranting transaction, and
issuing (S3100) the rapid transaction.

6. The method according to claims 2 and 5, wherein
the accepting (S4320) step accepts a first warranting transaction issued with a warranting fee lower than the maximum warranting fee.

7. The method according to any of claims 1 to 4, wherein the issuing step (S7100) further comprises the steps of:
setting (S7110), by the first transaction address (1101), a fixed warranting fee for the warranting transaction, and
issuing (S3100) the rapid transaction.

8. A method (8000) for executing transactions in a network (2000) implementing a distributed ledger, the network (2000) comprising a plurality of transaction addresses (1101-1103) and at least one warranting address (2300), the method (8000) comprising the steps of:
issuing (S8100) a rapid transaction, by a first transaction address (1101) toward a second transaction address (1102),
issuing (S8310) a warranting transaction, by the first transaction address (1101),
reading (S8200) the warranting transaction, by the warranting address (2300), and
warranting (S8300) the rapid transaction, by the warranting address (2300).

9. A method (9000) for executing transactions in a network (2000) implementing a distributed ledger, the network (2000) comprising a plurality of transaction addresses (1101-1103) and at least one warranting address (2300), the method (9000) comprising the steps of:
issuing (S9100) a transaction, by a first transaction address (1101) toward a second transaction address (1102),
indicating (S9110) the transaction as a rapid transaction, by the second transaction address (1102),
reading (S9200) the rapid transaction, by the warranting address (2300), and
warranting (S9300) the rapid transaction, by the warranting address (2300).
